# EUROPÄISCHE PATENTSCHRIFT

(11) **EP 3 324 521 B1**
(45) Veröffentlichungstag und Bekanntmachung des Hinweises auf die Patenterteilung: **15.04.2020**
(21) Anmeldenummer: 16199009.8
(22) Anmeldetag: 16.11.2016
(51) Int. Cl.: H02K 9/19, H02K 41/02

(54) **KÜHLPLATTE FÜR EINEN LINEARMOTOR**
COOLING PLATE FOR A LINEAR MOTOR
PLAQUE DE REFROIDISSEMENT POUR MOTEUR LINÉAIRE

(43) Veröffentlichungstag der Anmeldung: 23.05.2018
(73) Patentinhaber: ETEL S.A., 2112 Môtiers (CH)
(72) Erfinder: SZCZUKIEWICZ, Sylwia, 1006 Lausanne (CH); FERNANDES GONCALVES, José Manuel, 2013 Colombier (CH)
(74) Vertreter: Pleyer, Hans Anno

(56) Entgegenhaltungen:
- WO-A1-03/005538
- WO-A1-2014/036812
- US-A- 6 114 781
- US-A1- 2011 317 137

## Beschreibung

### GEBIET DER TECHNIK

Die vorliegende Erfindung betrifft eine Kühlplatte für einen Linearmotor und einen Linearmotor mit einer solchen Kühlplatte. Zur Steigerung der Leistung eines Linearmotors und zum Schutz der Umgebung vor übermäßigem Wärmeeintrag ist es notwendig, das Primärteil eines Linearmotors zu kühlen. Hierfür sind Kühlplatten geeignet, die in der Nähe der Spulen eines Primärteils des Linearmotors angeordnet sind.

### STAND DER TECHNIK

Linearmotoren sind aus der US 5642013 A bekannt. Hier wird beschrieben, wie solche Antriebe aufgebaut werden können, um Rastmomente zu vermeiden oder jedenfalls deutlich zu reduzieren. Zur Kühlung dieser Motoren werden hier Kühlkanäle zwischen den Spulen tragenden Zähnen des Eisenkerns vorgeschlagen. Solche Kühlkanäle reduzieren allerdings den Füllfaktor der Zahnzwischenräume, die maximale Kraft eines so gekühlten Motors ist niedriger als bei einem Motor mit einem höheren Füllfaktor.

In der US 5864187 ist ein Linearmotor beschrieben, der von der Rückseite des Blechpakets, also von der den Zähnen und Spulen gegenüberliegenden Seite her gekühlt wird. Hierzu sitzt der in Epoxidharz vergossene Eisenkern in einem aktiv gekühlten Rahmen aus Metall, auf dessen Rückseite, also den Zähnen und Spulen des Eisenkerns abgewandt, Kühlkanäle verlaufen. In einem Ausführungsbeispiel sind Einlass und Auslass für das Kühlmittel nebeneinander am selben Ende des Linearmotors angeordnet. Ein mäanderförmiger Kühlkanal wandert zum gegenüber liegenden Ende des Linearmotors und von dort wieder zurück, so dass die Kühlwirkung über die ganze Länge des Motors gleichmäßig verteilt ist. Solche mäanderförmigen Kühlkanäle sind allerdings wegen der häufigen Richtungswechsel beim Fräsen sehr aufwändig zu fertigen.

Die US 8976333 B2 beschreibt eine Kühlplatte für einen Linearmotor. Diese Kühlplatte nützt den Effekt, dass ein turbulent strömendes Kühlmittel Wärme besser aufnehmen kann als ein laminar strömendes Kühlmittel. Die Kühlplatte sieht hierfür eine Anordnung von drei übereinander liegenden, über Öffnungen und Rohre miteinander in Verbindung stehenden Kammern vor, durch die das Kühlmittel strömt. Eine Kammer steht dabei in Kontakt mit der zu kühlenden Fläche, die anderen Kammern dienen der Zu- bzw. Abfuhr des Kühlmittels. Der Aufbau dieser Kühlplatte ist allerdings sehr aufwändig und damit teuer.

Die WO 03/005538 A1 offenbart eine Kühlplatte für einen Linearmotor, die ein flächiges Gehäuse mit einer gekühlten Fläche zur thermischen Kopplung an eine zu kühlende Fläche aufweist, wobei in dem Gehäuse parallel zur gekühlten Fläche erstreckte, durch eine Membran getrennte erste und zweite Kammern angeordnet sind, wobei das Gehäuse zwei Halbschalen und die zwischen den Halbschalen angeordnete und mit beiden Halbschalenverbundene Membran aufweist, und wobei die der gekühlten Fläche abgewandte erste Kammer mit einem Kühlmitteleinlass und die durch die gekühlte Fläche begrenzte zweite Kammer mit einem Kühlmittelauslass verbunden ist. Das Kühlmittel durchfließt die Kühlplatte in Leitungsrohren, weswegen der Wärmeübergang in das Kühlmittel nicht optimal ist.

### ZUSAMMENFASSUNG DER ERFINDUNG

Es ist daher Aufgabe der Erfindung, eine Kühlplatte für einen Linearmotor anzugeben, die einen besonders einfachen Aufbau bei gleichzeitig guter Wärmeabfuhr aufweist.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird eine Kühlplatte für einen Linearmotor offenbart, die ein flächiges Gehäuse mit einer gekühlten Fläche zum Anlegen an eine zu kühlende Fläche aufweist, wobei in dem Gehäuse parallel zur gekühlten Fläche erstreckte, durch eine Membran getrennte erste und zweite Kammern angeordnet sind. Das Gehäuse weist zwei Halbschalen und die zwischen den Halbschalen angeordnete und mit beiden Halbschalen verbundene Membran auf. Die der gekühlten Fläche abgewandte erste Kammer ist mit einem Kühlmitteleinlass verbunden, die durch die gekühlte Fläche begrenzte zweite Kammer ist mit einem Kühlmittelauslass verbunden.

Die Membran weist eine Vielzahl von Düsen auf, durch die das Kühlmittel von der ersten Kammer in die zweite Kammer strömen kann. Die Düsen sind dabei so ausgelegt, dass die gekühlte Fläche mittels einer turbulenten Strömung des Kühlmittels gekühlt wird. Die Düsen erzeugen hierzu jeweils einen Kühlmittelstrahl, der auf die gekühlte Fläche trifft. Trotz des besonders einfachen Aufbaus der Kühlplatte wird so eine sehr gute Kühlung eines Primärteils eines Linearmotors ermöglicht. Da zudem die erste Kammer, die vom Primärteil abgewandt ist, und an der z.B. ein zu bewegendes Maschinenteil befestigt ist, von frischem Kühlmittel durchströmt wird, bleibt die erste Kammer und damit das Maschinenteil weitgehend kühl. Die Maschine ist also gut gegen einen Wärmeeintrag vom Linearmotor her abgeschirmt, Probleme mit thermischer Ausdehnung von Maschinenteilen können vermieden werden.

Weitere Details und Vorteile der Erfindung werden anhand der nachfolgenden Beschreibung eines Ausführungsbeispiels verdeutlicht.

### KURZE BESCHREIBUNG DER ZEICHNUNGEN

Dabei zeigt
- Figur 1: eine Explosionsdarstellung der Kühlplatte,
- Figur 2: eine weitere Explosionsdarstellung der Kühlplatte,
- Figur 3: die Kühlplatte im fertig montierten Zustand an einem Primärteil eines Linearmotors,
- Figur 4: einen Schnitt durch ein Anschlussstück der Kühlplatte.

### BESCHREIBUNG DER AUSFÜHRUNGSFORMEN

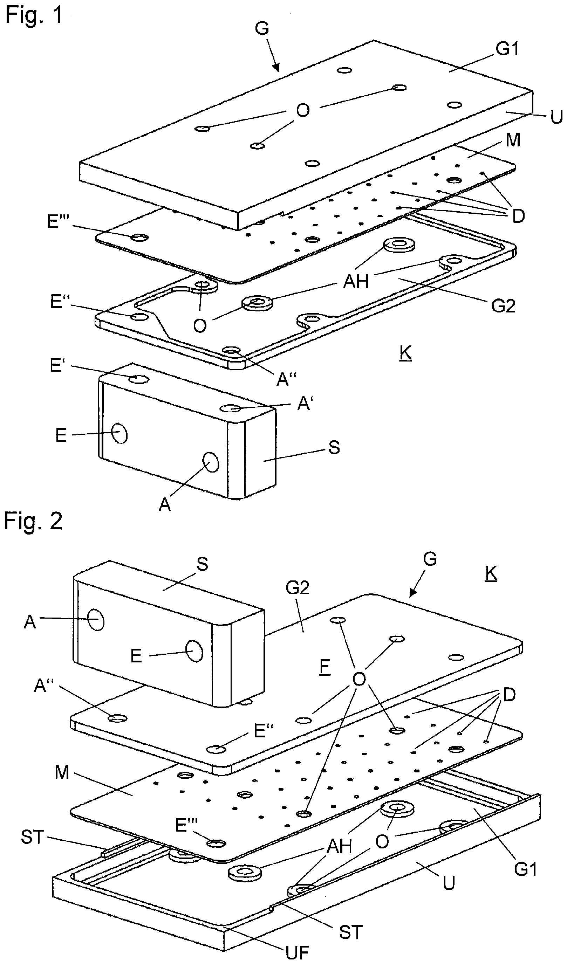

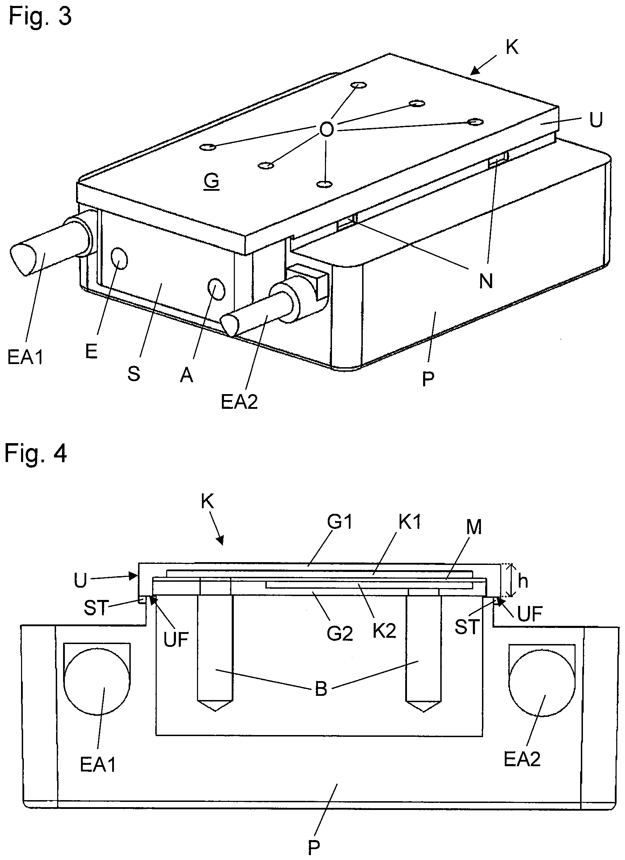

Eine erfindungsgemäße Kühlplatte K ist in unterschiedlichen Ansichten in den Figuren 1 - 4 dargestellt. Neben den Explosionsdarstellungen der Kühlplatte K in den Figuren 1 und 2 zeigen die Figuren 3 und 4 die an ein Primärteil P eines Linearmotors angebaute Kühlplatte K.

Wesentlicher Bestandteil der Kühlplatte K ist ein flächiges Gehäuse G, durch dessen Inneres Kühlmittel strömt und dabei von der Kühlplatte K aufgenommene Wärme abtransportiert. Die Kühlplatte K ist zur Montage auf der Rückseite eines Primärteils P eines Linearmotors gedacht, also auf der dem Luftspalt zwischen dem Primärteil P und dem Sekundärteil des Linearmotors abgewandten Seite. Die Kühlplatte K ist also zwischen dem Primärteil P und einer Vorrichtung oder Applikation angeordnet, die mit dem Linearmotor betrieben wird. Ein möglichst großer Teil der in den Spulen des Primärteils P erzeugten Wärme wird mit Hilfe der Kühlplatte K abtransportiert.

Wie man besonders gut den Figuren 1 und 2 entnehmen kann, ist das flächige Gehäuse G der Kühlplatte K aus zwei Halbschalen G1, G2 zusammengesetzt, mit einer dazwischen angeordneten Membran M, die das Gehäuse G in zwei Kammern K1, K2 unterteilt. Die innere Struktur der beiden Halbschalen G1, G2 lässt sich dank der beiden Explosionsdarstellungen aus unterschiedlichen Blickrichtungen gut nachvollziehen.

Die erste Halbschale G1 ist dem zu kühlenden Primärteil P des Linearmotors abgewandt. Auf dieser Seite der Kühlplatte K wird eine Applikation angebaut, also beispielsweise ein zu bewegendes Maschinenteil. Ein Kühlmitteleinlass E, der im Folgenden noch genauer erläutert wird, versorgt die erste Kammer K1 mit frischem Kühlmittel, so dass die erste Halbschale G1 im Wesentlichen die Temperatur des frischen Kühlmittels annehmen wird. Auf diese Weise kann ein Wärmeeintrag vom Primärteil P in die jeweilige Applikation vermieden werden. Anders gesagt ist dank der Kühlplatte K die Schnittstelle zwischen dem sich im Betrieb erwärmenden Primärteil P und einer Kundenapplikation thermisch besonders gut isoliert.

Die zweite Halbschale G2 liegt mit seiner flächigen Begrenzungswand, im Folgenden auch gekühlte Fläche F genannt, am Primärteil P des Linearmotors an, um dieses zu kühlen. Es ist von Vorteil, wenn die gekühlte Fläche F die zu kühlende Fläche des Primärteils P vollständig abdeckt. Dies kann etwa die Rückseite des Blechpaketes sein, auf das die Spulen des Linearmotors gewickelt sind, denn dieses Blechpaket leitet die Abwärme der Spulen gut zur Kühlplatte K ab.

Die beiden Halbschalen G1 und G2 und die Membran sind z.B. aus Aluminium, Edelstahl, Kupfer, Messing oder Titan gefertigt und können ihre innere Struktur z.B. durch einen Fräsprozess erhalten. Die Düsen D und sonstigen Öffnungen in der Membran M können gefräst, gebohrt oder mittels eines Ätzprozesses hergestellt werden. Die beiden Halbschalen G1, G2 und die Membran M werden z.B. durch Laserschweißen, Löten oder Diffusionsbonden miteinander verbunden. Besonders einfach gelingt die Verbindung mittels einer flächigen Lötfolie, die zwischen den Komponenten angeordnet wird. Nach dem Verlöten in einem Lötofen sind die jeweils miteinander verlöteten Kontaktbereiche abgedichtet, so dass keinerlei Dichtungen zur Herstellung der Kühlplatte K notwendig sind.

Nach dem Zusammenfügen der Halbschalen G1, G2 und der dazwischen angeordneten Membran M stehen die beiden Kammern K1 und K2 nur noch über die Düsen D in der Membran M in Verbindung.

Die Düsen D sorgen zusammen mit einem entsprechend gewählten Druck (ca. 3 - 6 bar haben sich bewährt, bei einem Druckabfall von ca. 1 - 3 bar an der Membran) in der ersten Kammer K1 dafür, dass in der zweiten Kammer K2 Kühlmittelstrahlen aus den Düsen D austreten und auf die gekühlte Fläche F treffen. Es entsteht dadurch ein eine turbulente Strömung des Kühlmittels, wodurch die Wärme von der gekühlten Fläche F deutlich besser abtransportiert wird als durch eine laminare Strömung. Die Düsen D können so angeordnet sein, dass stärker erhitzte Regionen stärker gekühlt werden, indem in diesem Bereich eine größere Dichte an Düsen D vorgesehen wird als in anderen Bereichen. Das Kühlmittel verlässt die zweite Kammer K2 durch einen Kühlmittelauslass A.

Das Gehäuse G bzw. die zweite Halbschale G2 ist mit einem Anschlussstück S verlötet. Dieses Anschlussstück S ermöglich es, den Kühlmitteleinlass E und den Kühlmittelauslass A (die zunächst senkrecht zum flächigen Gehäuse G liegen) um 90 Grad verkippt an eine Stirnseite des Primärteils P zu verlegen, dort wo üblicherweise auch die elektrischen Anschlüsse EA1, EA2 des Primärteils P parallel zur Ebene des flächigen Gehäuses G der Kühlplatte K herausgeführt sind. Hierzu weist das Anschlussstück S Bohrungen B auf, von denen je eine in der Schnittdarstellung der Figur 4 zu erkennen ist. Der Kühlmittelstrom fließt am Kühlmitteleinlass E und am Kühlmittelauslass A parallel zur Ebene des flächigen Gehäuses G, wird im Anschlussstück S um 90 Grad umgeleitet und tritt senkrecht in das Gehäuse G ein bzw. aus diesem heraus.

Der durch das flächige Gehäuse G und das Anschlussstück S gebildete rechte Winkel eignet sich außerdem gut als Anschlag bzw. Montagehilfe bei der Montage der Kühlplatte K am Primärteil P, denn bis auf eine seitliche Verschiebung des Gehäuses G sind dank des Winkels schon alle Freiheitsgrade der Kühlplatte K relativ zum Primärteil P festgelegt.

Anhand der Figuren 1 und 2 lässt sich der Weg E -> E' -> E" -> E''' des Kühlmittels in die erste Kammer K1 verfolgen. E und E' liegen beide im Anschlussstück S und sind durch Bohrungen B miteinander verbunden, E" ist eine Bohrung durch die zweite Halbschale G2, E''' eine dazu korrespondierende Bohrung in der Membran M. Das Kühlmittel gelangt dann über die Düsen D in die zweite Kammer K2. Der Weg A" -> A' -> A des Kühlmittels aus der zweiten Kammer führt über die eine Bohrung A" in der zweiten Halbschale G2 und über A' und A im Anschlussstück S.

Die erste Halbschale G1 weist eine umlaufende Umrandung U auf, die die zweite Halbschale G2 seitlich umschließt. Die Umrandung U weist außerdem eine Anlagefläche UF auf, mit der das flächige Gehäuse G am Primärteil P anliegt. Vorzugsweise ist die gekühlte Fläche F gegenüber dieser Anlagefläche UF etwas zurückgesetzt, so dass sie im montierten Zustand das Primärteil P nicht berührt. Der dadurch entstehende Spalt zwischen der zweiten Gehäuseschale G2 und dem Primärteil P sollte mit einer Wärmeleitpaste gefüllt werden, um die gekühlte Fläche F thermisch an das Primärteil P zu koppeln.

Die Umrandung U zusammen mit der Anlagefläche UF der ersten Halbschale G1 bewirkt, dass die zu berücksichtigende Bauhöhe h der Kühlplatte K ausschließlich vom Abstand der dem Primärteil P zugewandten Anlagefläche UF zur dem Primärteil P abgewandten Seite der ersten Halbschale G1 bestimmt wird. Die Toleranz oder Serienstreuung der Bauhöhe h wird also durch die Bearbeitungstoleranz von nur einem einzigen Bearbeitungsschritt bei der Herstellung der ersten Halbschale G1 definiert und kann somit klein gehalten werden. Eine Lösung, bei der die Bauhöhe h z.B. auch durch Abmessungen der Membran M und/oder der zweiten Halbschale G2, sowie vom Verbindungsprozess zwischen diesen Komponenten bestimmt würde, hätte eine deutlich höhere Serienstreuung dieser Bauhöhe h zur Folge. Dank der Abhängigkeit der Bauhöhe h von nur einer einzigen Fertigungstoleranz ist auch die Abmessung des Luftspalts zwischen dem Primärteil P und dem Sekundärteil des Linearmotors einer geringeren Serienstreuung unterworfen, denn der Luftspalt hängt unmittelbar von der Bauhöhe h des Gehäuses G ab.

Sieht man alternativ eine seitliche Umrandung an der zweiten Halbschale G2 vor, die die erste Halbschale G1 umschließt, lässt sich ebenfalls eine Bauhöhe h senkrecht zur Ebene des flächigen Gehäuses G erreichen, die nur von der Abmessung der Halbschale mit Umrandung abhängt.

Zu Befestigung von Maschinenelementen weist das Primärteil P auf seiner dem Gehäuse G zugewandten Rückseite geeignete Bohrungen oder T-förmige Nuten N auf. Das Gehäuse G bzw. die Halbschalen G1, G2 und die Membran M weisen korrespondierende Montageöffnungen O auf, durch die hindurch Schrauben in das Primärteil P geschraubt werden können. Das Maschinenelement, die Kühlplatte K und das Primärteil P werden dabei fest miteinander verbunden. Im Inneren der Kammern K1, K2 sind die Montageöffnungen O von Abstandshaltern AH umgeben. Diese Abstandshalter AH nehmen die bei der Montage des Linearmotors auftretenden Kräfte auf, so dass das Gehäuse nicht zusammengedrückt wird. Außerdem liegen die Abstandshalter AH flächig an der Membran M an und sind mit dieser verbunden, so dass durch die Montageöffnungen O kein Kühlmittel aus den Kammern K1, K2 austreten kann. Auch ein Anschwellen des Gehäuses G kann durch die beidseits mit der Membran M verbundenen Abstandshalter AH verhindert werden. Die Abstandshalter AH entstehen auf einfache Weise, wenn beim Ausräumen der Taschen, die die Kammern K1, K2 bilden, Inseln oder mit der äußeren Umrandung der Kammern K1, K2 verbundene Bereiche stehen gelassen werden, wie man in den Figuren 1 und 2 gut erkennen kann.

In den Figuren 2 und 4 erkennt man noch seitliche Stege ST an der ersten Halbschale G1. Diese seitlichen Stege ST ragen seitlich über die Anlageflächen UF und im montierten Zustand über das Primärteil P hinaus, so dass sie für die beim Luftspalt zu berücksichtigende Bauhöhe h des Gehäuses G keine Rolle spielen. Die seitlichen Stege ST bilden aber zusätzliche, seitliche Anschlagflächen zwischen der Kühlplatte K und dem Primärteil P, so dass die Montage der Kühlplatte K am Primärteil P erleichtert wird, indem auch die seitliche Verschiebung der Kühlplatte K relativ zum Primärteil P gesperrt wird, in Ergänzung zum oben beschriebenen Anschlag am rechten Winkel zwischen dem Anschlussstück S und dem Gehäuse G.

Die hier beschriebene Kühlplatte K weist dank der turbulenten Strömung in ihrem Inneren eine im Vergleich zu herkömmlichen Kühlplatten mit laminarer Strömung deutlich verbesserte Kühlleistung auf. Die Kühlplatte K ist aber im Vergleich zu herkömmlichen Kühlplatten mit turbulenter Strömung deutlich einfacher aufgebaut und dadurch wesentlich kostengünstiger herzustellen. Dank einiger konstruktiver Details ist die Kühlplatte K zudem besonders für die Anwendung am Primärteil P eines Linearmotors geeignet.

## Patentansprüche

1. Kühlplatte für einen Linearmotor, die ein flächiges Gehäuse (G) mit einer gekühlten Fläche (F) zur thermischen Kopplung an eine zu kühlende Fläche aufweist, wobei in dem Gehäuse (G) parallel zur gekühlten Fläche (F) erstreckte, durch eine Membran (M) getrennte erste und zweite Kammern (K1, K2) angeordnet sind, wobei das Gehäuse (G) zwei Halbschalen (G1, G2) und die zwischen den Halbschalen (G1, G2) angeordnete und mit beiden Halbschalen (G1, G2) verbundene Membran (M) aufweist, und wobei die der gekühlten Fläche (F) abgewandte erste Kammer (K1) mit einem Kühlmitteleinlass (E) und die durch die gekühlte Fläche (F) begrenzte zweite Kammer (K2) mit einem Kühlmittelauslass (A) verbunden ist, **dadurch gekennzeichnet, dass** die Membran (M) eine Vielzahl von Düsen (D) aufweist, und dass die Düsen (D) zur Erzeugung von Kühlmittelstrahlen ausgelegt sind, die die gekühlte Fläche (F) mittels einer turbulenter Strömung kühlen.

2. Kühlplatte nach Anspruch 1, **dadurch gekennzeichnet, dass** das Gehäuse (G) mit einem Anschlussstück (S) verbunden ist, das den Kühlmitteleinlass (E) und den Kühlmittelauslass (A) aufweist.

3. Kühlplatte nach Anspruch 2, **dadurch gekennzeichnet, dass** in das Anschlussstück (S) Bohrungen (B) eingebracht sind, die das Kühlmittel um 90 Grad umleiten, so dass der Kühlmitteleinlass (E) und der Kühlmittelauslass (A) parallel zur Ebene des flächigen Gehäuses (G) liegen.

4. Kühlplatte nach einem der vorhergehenden Ansprüche, **dadurch gekennzeichnet, dass** eine der beiden Halbschalen (G1) eine Umrandung (U) aufweist, die die andere der beiden Halbschalen (G2) seitlich umschließt, so dass eine Bauhöhe (h) des Gehäuses (G) senkrecht zur Ebene des Gehäuses (G) nur von der Halbschale (G1) mit der Umrandung (U) bestimmt wird.

5. Kühlplatte nach Anspruch 4, **dadurch gekennzeichnet, dass** die erste Halbschale (G1) die Umrandung (U) aufweist, die die zweite Halbschale (G2) seitlich umschließt, wobei die Umrandung (U) eine gegenüber der gekühlten Fläche (F) vorspringende Anlagefläche (UF) aufweist, mit der das Gehäuse (G) an der zu kühlenden Fläche anliegt, so dass die Bauhöhe (h) des Gehäuses (G) senkrecht zur zu kühlenden Fläche lediglich vom Abstand der Anlagefläche (UF) zur gegenüberliegenden Seite der ersten Halbschale (G1) bestimmt wird.

6. Linearmotor mit einer Kühlplatte (K) nach einem der vorhergehenden Ansprüche.

7. Linearmotor nach Anspruch 6, **dadurch gekennzeichnet, dass** die gekühlte Fläche (F) des Gehäuses (G) thermisch an die einem Luftspalt des Linearmotors abgewandte Rückseite eines Primärteils (P) des Linearmotors gekoppelt ist.

8. Linearmotor nach Anspruch 6 oder 7, **dadurch gekennzeichnet, dass** ein durch die vorspringende Anlagefläche (UF) entstehender Spalt zwischen der gekühlten Fläche (F) und der zu kühlenden Fläche des Primärteils (P) mit einer thermisch leitfähigen Paste gefüllt ist.

9. Linearmotor nach einem der Ansprüche 6 - 8, **dadurch gekennzeichnet, dass** das Anschlussstück (S) an einer Stirnseite des Primärteils (P) anliegt.

10. Linearmotor nach einem der Ansprüche 6 - 9, **dadurch gekennzeichnet, dass** die gekühlte Fläche (F) des Gehäuses (G) die zu kühlenden Fläche des Primärteils (P) vollständig abdeckt.

## Claims

1. Cooling plate for a linear motor, said cooling plate having a planar housing (G) for thermally coupling to a face to be cooled having a cooled face (F), wherein first and second chambers (K1, K2) which extend parallel with the cooled face (F) and are separated by a membrane (M) are disposed in the housing (G), wherein the housing (G) comprises two half-shells (G1, G2) and the membrane (M) which is disposed between the half-shells (G1, G2) and connected to both half-shells (G1, G2), and wherein the first chamber (K1) facing away from the cooled face (F) is connected to a coolant inlet (E), and the second chamber (K2) delimited by the cooled face (F) is connected to a coolant outlet (A), **characterized in that** the membrane (M) has a multiplicity of nozzles (D), and **in that** the nozzles (D) are conceived for generating coolant jets which by means of a turbulent flow cool the cooled face (F) .

2. Cooling plate according to Claim 1, **characterized in that** the housing (G) is connected to a connector piece (S) which comprises the coolant inlet (E) and the coolant outlet (A).

3. Cooling plate according to Claim 2, **characterized in that** bores (B) which divert the coolant by 90° such that the coolant inlet (E) and the coolant outlet (A) lie parallel with the plane of the planar housing (G) are incorporated in the connector piece (S) .

4. Cooling plate according to one of the preceding claims, **characterized in that** one of the two half-shells (G1) has a rim (U) which laterally encloses the other of the two half-shells (G2) such that an installation height (h) of the housing (G) perpendicular to the plane of the housing (G) is determined only by the half-shell (G1) having the rim (U).

5. Cooling plate according to Claim 4, **characterized in that** the first half-shell (G1) has the rim (U) which laterally encloses the second half-shell (G2), wherein the rim (U) in relation to the cooled face (F) has a projecting bearing face (UF) by way of which the housing (G) bears on the face to be cooled such that the installation height (h) of the housing (G) perpendicular to the face to be cooled is determined only by the spacing of the bearing face (UF) from the opposite side of the first half-shell (G1).

6. Linear motor having a cooling plate (K) according to one of the preceding claims.

7. Linear motor according to Claim 6, **characterized in that** the cooled face (F) of the housing (G) is thermally coupled to the rear side of a primary part (P) of the linear motor, said rear side facing away from an air gap of the linear motor.

8. Linear motor according to Claim 6 or 7, **characterized in that** a gap created by the projecting bearing face (UF) between the cooled face (F) and that face of the primary part (P) that is to be cooled is filled with a thermally conductive paste.

9. Linear motor according to one of Claims 6 to 8, **characterized in that** the connector piece (S) bears on an end side of the primary part (P).

10. Linear motor according to one of Claims 6 to 9, **characterized in that** the cooled face (F) of the housing (G) completely covers that face of the primary part (P) that is to be cooled.

## Revendications

1. Plaque de refroidissement pour un moteur linéaire, laquelle comprend un boîtier plan (G) doté d'une surface refroidie (F) destinée à être couplée thermiquement à une surface à refroidir, des première et deuxième chambres (K1, K2) s'étendant parallèlement à la surface refroidie (F) et séparées par une membrane (M) étant disposées dans le boîtier (G), le boîtier (G) comprenant deux demi-coques (G1, G2) et la membrane (M) disposée entre les demi-coques (G1, G2) et reliée aux deux demi-coques (G1, G2), et la première chambre (K1) opposée à la surface refroidie (F) étant reliée à une entrée d'agent de refroidissement (E) et la deuxième chambre (K2) délimitée par la surface refroidie (F) étant reliée à une sortie d'agent de refroidissement (A), **caractérisée en ce que** la membrane (M) comprend une pluralité de buses (D), et **en ce que** les buses (D) sont conçues pour produire des jets d'agent de refroidissement qui refroidissent la surface refroidie (F) au moyen d'un écoulement turbulent.

2. Plaque de refroidissement selon la revendication 1, **caractérisée en ce que** le boîtier (G) est relié à une pièce de raccordement (S) qui comprend l'entrée d'agent de refroidissement (E) et la sortie d'agent de refroidissement (A).

3. Plaque de refroidissement selon la revendication 2, **caractérisée en ce que** des alésages (B) sont ménagés dans la pièce de raccordement (S), lesquels dévient l'agent de refroidissement de 90 degrés, de telle sorte que l'entrée d'agent de refroidissement (E) et la sortie d'agent de refroidissement (A) soient situées parallèlement au plan du boîtier plan (G).

4. Plaque de refroidissement selon l'une des revendications précédentes, **caractérisée en ce que** l'une des deux demi-coques (G1) comprend une bordure (U) qui entoure latéralement l'autre des deux demi-coques (G2) de sorte qu'une hauteur totale (h) du boîtier (G) perpendiculairement au plan du boîtier (G) ne soit définie que par la demi-coque (G1) dotée de la bordure (U) .

5. Plaque de refroidissement selon la revendication 4, **caractérisée en ce que** la première demi-coque (G1) comprend la bordure (U) qui entoure latéralement la deuxième demi-coque (G2), la bordure (U) comprenant une surface d'appui (UF) faisant saillie par rapport à la surface refroidie (F), surface d'appui par laquelle le boîtier (G) s'appuie contre la surface à refroidir, de sorte que la hauteur totale (h) du boîtier (G) perpendiculairement à la surface à refroidir soit définie seulement par la distance de la surface d'appui (UF) au côté opposé de la première demi-coque (G1).

6. Moteur linéaire comprenant une plaque de refroidissement (K) selon l'une des revendications précédentes.

7. Moteur linéaire selon la revendication 6, **caractérisé en ce que** la surface refroidie (F) du boîtier (G) est couplée thermiquement au côté arrière d'une partie primaire (P) du moteur linéaire, lequel côté arrière est opposé à un entrefer du moteur linéaire.

8. Moteur linéaire selon la revendication 6 ou 7, **caractérisé en ce qu'**un espace, produit par la surface d'appui (UF) saillante, entre la surface refroidie (F) et la surface à refroidir de la partie primaire (P) est rempli d'une pâte thermiquement conductrice.

9. Moteur linéaire selon l'une des revendications 6 à 8, **caractérisé en ce que** la pièce de raccordement (S) s'appuie contre un côté frontal de la partie primaire (P) .

10. Moteur linéaire selon l'une des revendications 6 à 9, **caractérisé en ce que** la surface refroidie (F) du boîtier (G) recouvre complètement la surface à refroidir de la partie primaire (P).
